# EUROPEAN PATENT APPLICATION

(11) **EP 4 641 762 A1**
(43) Date of publication of application: **29.10.2025**
(21) Application number: 24216102.4
(22) Date of filing: 28.11.2024
(51) Int. Cl.: H01M 10/613, H01M 10/625, H01M 10/643, H01M 10/6569, H01M 10/66, H01M 50/107, H01M 50/249, H01M 10/6557, H01M 10/6568

(54) **BATTERY PACK AND VEHICLE**

(30) Priority: 25.04.2024 CN 202420884762 U
(71) Applicant: CALB Group Co., Ltd., Changzhou City, Jiangsu Province (CN)
(72) Inventor: YANG, Xulong, Changzhou City, Jiangsu Province (CN); WANG, Shuaifeng, Luoyang City, Henan Province (CN); LI, Ran, Changzhou City, Jiangsu Province (CN); JIANG, Hao, Changzhou City, Jiangsu Province (CN)
(74) Representative: Becker, Eberhard

(57) **Abstract**

A battery pack includes a battery box (100), a cylindrical battery (200) and a heat exchange system. The battery box (100) includes a bottom plate (110); the cylindrical battery (200) is disposed in the battery box (100) and axially parallel to the bottom plate (110); the heat exchange system includes a heat exchange plate (300). A large surface of the heat exchange plate (300) is disposed on the bottom plate (110) relatively perpendicularly; the heat exchange plate (300) contacts with an end surface of the cylindrical battery (200); the heat exchange plate (300) has a heat exchange passage. The heat exchange passage includes at least one inflow passage (310) and at least one outflow passage (320). A ratio of a sum of cross-sectional areas of each of the inflow passages (310) to a sum of cross-sectional areas of each of the outflow passages (320) is 3:2 to 4:1.

## Description

### BACKGROUND

### Technical Field

The present invention relates to the technical field of batteries, and particularly relates to a battery pack.

### Description of Related Art

In the prior art design of the battery pack, part of the battery pack adopts a design in which the cylindrical batteries are placed in a lying manner, i.e., the axial direction of the cylindrical batteries is parallel to the bottom plate of the battery box, and the heat exchange plates are arranged on the bottom plate in a relatively perpendicular form to perform the contact and heat exchange between the end surface of the cylindrical battery and the heat exchange plate. On this basis, with regard to the heat exchange plate adopting the direct cooling mode, there is a problem that the cooling medium changes into a gaseous state prematurely when flowing in the internal flow passage of the heat exchange plate during the direct cooling process, which affects the temperature equalization effect of the heat exchange plate, resulting in poor temperature consistency of the battery pack.

### SUMMARY

A main object of the present invention is to overcome at least one of the above-mentioned disadvantages of the prior art and provide a battery pack with a better temperature equalization effect of a heat exchange plate.

In order to achieve the above purpose, the present invention adopts the following technical solution.

According to an aspect of the present invention, a battery pack is provided. The battery pack includes a battery box, a cylindrical battery and a heat exchange system; wherein the battery box includes a bottom plate; the cylindrical battery is disposed in the battery box and axially parallel to the bottom plate; the heat exchange system includes a heat exchange plate, wherein a large surface of the heat exchange plate is disposed on the bottom plate relatively perpendicularly; the heat exchange plate contacts with the cylindrical battery for heat exchange; the heat exchange plate has a heat exchange passage therein; the heat exchange passage includes at least one inflow passage and at least one outflow passage; and the heat exchange passage is adapted to be in fluid communication with a cooling medium which is adapted to exchange heat with the cylindrical battery by a liquid-to-gas conversion process; wherein a ratio of a sum of cross-sectional areas of each of the inflow passages to a sum of cross-sectional areas of each of the outflow passages is 3:2 to 4:1.

From the above technical solution, it can be seen that the advantages and positive effects of the battery pack proposed by the present invention are as follows.

The battery pack proposed by the present invention adopts the arrangement form of cylindrical batteries placed in a lying manner and a heat exchange plate placed in an upright manner. The heat exchange passage is disposed inside the heat exchange plate. The heat exchange passage includes an inflow passage and an outflow passage. The ratio of the sum of the cross-sectional areas of each of the inflow passages to the sum of the cross-sectional areas of each of the outflow passages is 3:2 to 4:1. By the above-mentioned structural design, the present invention can enable more heat exchange medium to enter the heat exchange passage by using the design with a relatively large cross-sectional area of the inflow passage, and also can increase the internal pressure of the flow passage by using the design with a relatively small cross-sectional area of the outflow passage, thereby ensuring the temperature equalization effect of the heat exchange plate and improving the temperature consistency of the battery pack.

Another main object of the present invention is to overcome at least one of the above-mentioned drawbacks of the prior art and to provide a vehicle with a better temperature consistency of the battery pack.

In order to achieve the above purpose, the present invention adopts the following technical solution.

According to another aspect of the present invention, a vehicle is provided, including the battery pack of the present invention, wherein the heat exchange passage of the battery pack is adapted to circulate a cooling medium; and the cooling medium is adapted to exchange heat with the cylindrical battery in the liquid-to-gas conversion process.

From the above technical solution, it can be seen that the advantages and positive effects of the vehicle proposed by the present invention are as follows.

The vehicle proposed by the present invention adopts the battery pack proposed by the present invention, and the heat exchange system adopts a direct cooling form. By means of the above-mentioned design, the present invention can increase the internal pressure of the flow passage by using the design that the cross-sectional area of the outflow passage is relatively small, so that the cooling medium can be easily maintained under a liquid state at a relatively high pressure to avoid premature conversion to the gaseous state. It ensures that sufficient liquid cooling medium can participate in the evaporation and heat absorption in the outflow passage, thereby further ensuring the temperature equalization effect of the heat exchange plate. It is further suitable for the application of the direct cooling solution.

### BRIEF DESCRIPTION OF THE DRAWINGS

Various objects, features and advantages of the present invention will become more apparent by considering the following detailed description of preferred embodiments of the present invention in conjunction with the accompanying drawings. The drawings are merely exemplary illustrations of the present invention and are not necessarily drawn to scale. In the drawings, like reference numerals refer to the same or similar parts throughout the several views. In the drawings,
FIG. 1 is a structurally perspective view showing a battery pack according to an exemplary embodiment;
FIG. 2 is a structurally perspective view of a partial structure of the battery pack shown in FIG. 1; and
FIG. 3 is a schematic cross-sectional view of the combined structure of the bottom plate and the heat exchange plate shown in FIG. 2.

### Description of Reference Numerals:

100, battery box;
110, bottom plate;
1101, module bottom plate;
200, cylindrical battery;
201, battery set;
202, battery column;
210, first end surface;
300, heat exchange plate;
310, inflow passage;
320, outflow passage;
X, first direction;
Y, second direction;
Z, third direction.

### DESCRIPTION OF THE EMBODIMENTS

Typical examples embodying the features and advantages of the present invention will be described in detail in the following description. It should be understood that the present invention can have various modifications in different examples without departing from the scope of the present invention, and that the description and the drawings are intended for illustrative purposes in nature and are not intended to limit the present invention.

In the following description of different exemplary embodiments of the present invention, reference is made to the accompanying drawings, which form a part of the present invention, and in which different exemplary structures, systems, and steps that may implement aspects of the present invention are shown by way of example. It should be understood that other specific aspects of components, structures, exemplary devices, systems, and steps may be used, and structural and functional modifications may be made without departing from the scope of the present invention. Moreover, while the terms "over", "between", "within", and the like may be used in this description to describe various exemplary features and elements of the present invention, these terms are used herein for convenience only, e.g., in accordance with the direction of the examples described in the figures. Nothing in this description should be understood as requiring a specific three-dimensional direction of the structure to fall within the scope of the present invention.

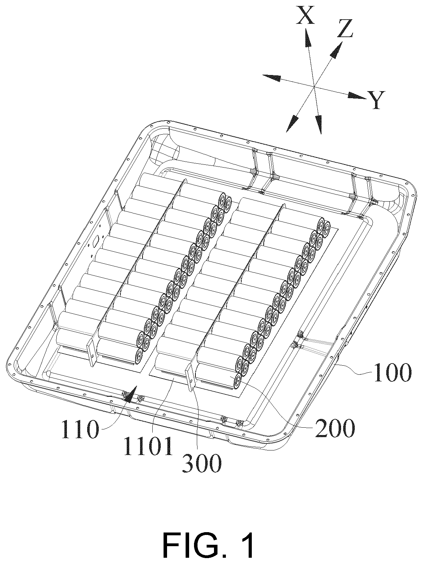

Referring to FIG. 1, there is representatively shown a schematic perspective view of a battery pack according to the present invention. In this exemplary embodiment, the battery pack proposed by the present invention is described by taking a battery applied to a vehicle as an example. It will be readily understood by those skilled in the art that in order to apply the relevant design of the present invention to other types of battery devices, various modifications, additions, substitutions, deletions or other changes to the following specific embodiments are still within the scope of the principles of the battery pack proposed by the present invention.

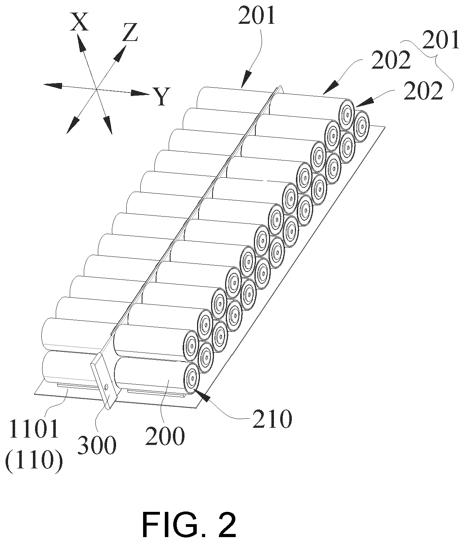

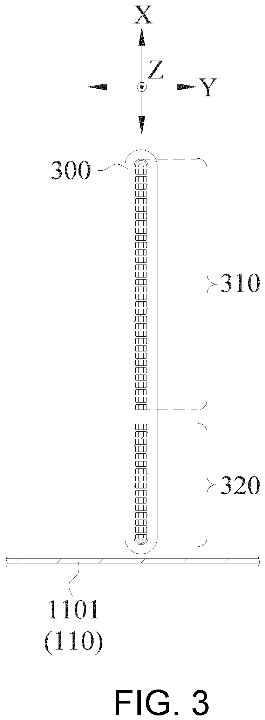

As shown in FIG. 1, in an embodiment of the present invention, the battery pack proposed by the present invention includes a battery box 100, a cylindrical battery 200 and a heat exchange system. Referring to FIG. 2 and FIG, 3 in conjunction, FIG. 2 representatively shows a structurally perspective view of a partial structure of the battery pack, in which a combined structure of a bottom plate 110, a heat exchange plate 300 and a partial cylindrical battery 200 is specifically shown. A schematic cross-sectional view of the combined structure of the bottom plate 110 and the heat exchange plate 300 is representatively shown in FIG. 3. Hereinafter, the structure, connection mode and functional relationship of each main component of the battery pack proposed by the present invention will be described in detail in conjunction with the above drawings.

As shown in FIG. 1 to FIG. 3, in an embodiment of the present invention, the battery box 100 includes a bottom plate 110. The cylindrical batteries 200 are disposed in the battery box 100. The cylindrical batteries 200 are arranged in a "lying" manner with respect to the bottom plate 110, i.e., the axial direction of the cylindrical batteries 200 is parallel to the bottom plate 110. The large surface of the heat exchange plate 300 is arranged perpendicularly with respect to the bottom plate 110. That is to say, the heat exchange plate 300 is arranged in an "upright" manner with respect to the bottom plate 110. The heat exchange plate 300 is in contact and heat exchange with the cylindrical battery 200 (which may be in direct contact or in indirect contact via other structures). The "large surface" refers to a surface with the largest surface area of the heat exchange plate 300. Here, the heat exchange plate 300 has a heat exchange passage therein. The heat exchange passage includes an inflow passage 310 and an outflow passage 320. The flow direction of the heat exchange medium in the inflow passage 310 is an inflow direction to the heat exchange plate 300. The flow direction of the heat exchange medium in the outflow passage 320 is an outflow direction to the heat exchange plate 300. On this basis, the ratio of the sum of the cross-sectional areas of each of the inflow passages 310 to the sum of the cross-sectional areas of each of the outflow passages 320 is 3:2 to 4:1, for example, 3:2, 8:5, 5:3, 11:4, 3:1, 4:1, etc. By the above-mentioned structural design, the present invention can allow more heat exchange medium to the heat exchange passage by using the design with a relatively large cross-sectional area of the inflow passage 310, and also can increase the internal pressure of the flow passage by using the design with a relatively small cross-sectional area of the outflow passage 320, thereby ensuring the temperature equalization effect of the heat exchange plate 300 and improving the temperature consistency of the battery pack.

In an embodiment of the present invention, the ratio of the sum of the cross-sectional areas of each of the inflow passages 310 to the sum of the cross-sectional areas of each of the outflow passages 320 may be 7:4 to 8:3, such as, 7:4, 9:5, 2:1, 7:3, 8:3, etc. In some embodiments, the ratio of the sum of the cross-sectional areas of each of the inflow passages 310 to the sum of the cross-sectional areas of each of the outflow passages 320 is in the range of 3:2 to 4:1, may be less than 7:4, or may be greater than 8:3, and is not limited in this embodiment.

As shown in FIG. 3, in an embodiment of the present invention, the heat exchange passage includes at least two inflow passages 310 and at least two outflow passages 320. On this basis, in a first direction X perpendicular to the bottom plate 110, at least two of the inflow passages 310 are at different distances from the bottom plate 110. At least two of the outflow passages 320 are at different distances from the bottom plate 110. The inflow passage 310 farthest from the bottom plate 110 is farther away from the bottom plate 110 than the outflow passage 320 farthest from the bottom plate 110. By means of the above-mentioned structural design, the present invention can achieve that the inlet of the heat exchange medium of the heat exchange plate 300 is located above the outlet of the heat exchange medium, and accordingly the flow rate of the heat exchange medium can be increased by using the action of gravity to accelerate the heat exchange efficiency.

As shown in FIG. 3, based on the structural design that the inflow passage 310 farthest from the bottom plate 110 is farther away from the bottom plate 110 than the outflow passage 320 farthest from the bottom plate 110. In an embodiment of the present invention, in a first direction X, the inflow passage 310 closest to the bottom plate 110 is farther away from the bottom plate 110 than the outflow passage 320 farthest from the bottom plate 110. By means of the above-mentioned structural design, the present invention enables all the inflow passages 310 to be farther away from the bottom plate 110 than the outflow passages 320, thereby further using the action of gravity to increase the flow rate of the heat exchange medium and further accelerating the heat exchange efficiency.

As shown in FIG. 3, the heat exchange plate 300 may take the configuration of a harmonica-shaped tube, i.e., the inflow passages 310 and the outflow passages 320 are arranged in a single direction (e.g., the first direction) in a row. On this basis, any inflow passage 310 may be located on a side of any outflow passage 320 facing away from the bottom plate 110. In some embodiments, the heat exchange plate 300 may also adopt other types of flow passage arrangements, in which case a portion of the inflow passages 310 and the outflow passages 320 may be misaligned in the first direction. For example, at least one inflow passage 310 may be located on a side of at least one outflow passage 320 facing towards the bottom plate 110, without being limited to the above embodiments.

It should be noted that in an embodiment of the present invention, if the heat exchange passage of the heat exchange plate 300 may include only one inflow passage 310 and one outflow passage 320, the ratio of the cross-sectional area of the inflow passage 310 to the cross-sectional area of the outflow passage 320 is 3:2 to 3:1. In some embodiments, when the heat exchange passage includes one inflow passage 310, at least two outflow passages 320 may be included at the same time, or when the heat exchange passage includes one outflow passage 320, at least two inflow passages 310 may be included at the same time, without being limited to the above embodiments.

As shown in FIG. 2, in an embodiment of the present invention, the cylindrical battery 200 has a side surface and two end surfaces. The side surface is connected between the two end surfaces which are spaced apart along the axial direction of the cylindrical battery 200 (for example, a second direction Y parallel to the axial direction of the cylindrical battery 200) and are respectively perpendicular to the axial direction. The heat exchange plate 300 may be in contact and heat conduction connection with the end surface of the cylindrical battery 200, for example, in direct contact connection or in indirect connection via other heat conduction structures such as a heat conduction glue. By the above-mentioned structural design, the present invention can facilitate the arrangement of the cylindrical battery 200, which is beneficial to improve the energy density of the battery pack.

As shown in FIG. 2, based on the structural design that the heat exchange plate 300 is in contact with the end surface of the cylindrical battery 200, in an embodiment of the present invention, the cylindrical battery 200 includes a housing and a cell. The cell is arranged in the housing, and the cell includes a positive pole tab and a negative pole tab. Here, in the second direction Y, the cell has a first end and a second end opposite to each other. The positive pole tab and the negative pole tab are both located at the first end. The two end surfaces of the cylindrical battery 200 are respectively a first end surface 210 and a second end surface, the first end surface 210 corresponding to the first end, and the second end surface corresponding to the second end. On this basis, the heat exchange plate 300 may be in heat conduction with the second end surface of the cylindrical battery 200. By the above-mentioned structural design, since there are other structures, such as electrode lead-out ends, on a side of the first end surface 210 of the cylindrical battery 200, the present invention can avoid interference between the heat exchange plate 300 and the structures, such as electrode lead-out ends, of the cylindrical battery 200.

As shown in FIG. 2, in an embodiment of the present invention, the battery pack proposed by the present invention may include at least one battery set 201 including at least two layers of battery columns 202 arranged in a first direction X, and the first direction X is perpendicular to the bottom plate 110. The battery columns 202 includes at least two cylindrical batteries 200 arranged in a third direction Z, and the third direction Z is parallel to the bottom plate 110 and parallel to the heat exchange plate 300. By the above-mentioned structural design, the present invention can make full use of the inner space of the battery box 100 to arrange the cylindrical battery 200, which is beneficial to improve the energy density of the battery pack.

As shown in FIG. 2 and FIG. 3, based on the structural design that the battery set 201 includes at least two layers of battery columns 202 arranged in the first direction X. In an embodiment of the present invention, the inflow passage 310 and the outflow passage 320 may be arranged in the first direction X. By the above-mentioned structural design, since at least two layers of the battery columns 202 are arranged along the first direction X, the present invention can specifically improve the temperature equalization effect of the heat exchange plate 300 in the first direction X by using the special design of the cross-sectional area of the inflow passage 310 and the outflow passage 320, which is beneficial to reduce the temperature difference of the battery columns 202 of different layers and further improve the temperature consistency of the battery pack.

As shown in FIG. 1 and FIG. 2, based on the structural design that the battery set 201 includes at least two battery columns 202 arranged along the first direction X, in an embodiment of the present invention, the battery pack proposed by the present invention may include at least two battery packs 201 arranged along the second direction Y. On this basis, the end surfaces (e.g., second end surfaces) of the cylindrical batteries 200 of the adjacent two battery sets 201 may contact the opposite sides of the heat exchange plate 300, respectively. By the above-mentioned structural design, the present invention can use the heat exchange plate 300 to achieve contact and heat exchange with the cylindrical batteries 200 of two adjacent battery sets 201, which is beneficial to reduce the number of parts and simplify the structural complexity.

In an embodiment of the present invention, the heat exchange system can take the form of direct cooling, and the heat exchange medium can be a cooling medium. Namely, the heat exchange passage is suitable for circulating the cooling medium, and the cooling medium is suitable for exchanging heat with the cylindrical battery 200 in the liquid-to-gas conversion process. Specifically, the cooling medium enters the heat exchange flow passage in a liquid state, and exchanges heat with the cylindrical battery 200 via heat transfer from the heat exchange plate 300 in the heat exchange flow passage. That is, the cooling of the cylindrical battery 200 is performed by utilizing the evaporation heat absorption of the cooling medium. By means of the above-mentioned design, the present invention can increase the internal pressure of the flow passage by using the design that the cross-sectional area of the outflow passage 320 is relatively small, so that the cooling medium can be easily maintained under a liquid state at a relatively high pressure to avoid premature conversion to the gaseous state. It ensures that sufficient liquid cooling medium can participate in the evaporation and heat absorption in the outflow passage 320, thereby further ensuring the temperature equalization effect of the heat exchange plate 300. It is further suitable for the application of the direct cooling solution.

In an embodiment of the present invention, the cylindrical battery 200 may be a lithium iron battery. For example, the cathode active material of the cylindrical battery 200 may be lithium iron phosphate.

It should be noted that as an example of the embodiment shown in FIG. 1, when the cylindrical batteries 200 are arranged on both sides of the heat exchange plate 300 in the second direction Y, the heat exchange plate 300, the cylindrical batteries 200 on both sides and other relevant structures may together constitute a battery module. The battery module may be disposed on a module bottom plate 1101 and disposed on the bottom plate 110 of the battery box via the module bottom plate 1101. At this time, with regard to the relative arrangement relationship between each structure and the bottom plate 110 in this description, it can be correspondingly understood as the relative arrangement relationship between each structure and the module bottom plate 1101. By the above-mentioned structural design, the present invention can improve the integration degree of the battery module, which is beneficial to improve the assembly efficiency. It should be understood that in some embodiments, the battery pack may not be provided with the module bottom plate 1101, and the battery module may be provided directly on the bottom plate 110 of the battery box 100.

It should be noted here that the battery pack shown in the accompanying drawings and described in this description are only a few examples of many types of battery packs that can employ the principles of the present invention. It should be clearly understood that the principles of the present invention are by no means limited to any detail or any component of the battery pack shown in the drawings or described in this description.

In summary, the battery pack proposed by the present invention adopts an arrangement in which the cylindrical batteries 200 are placed in a lying manner and the heat exchange plate 300 is placed in an "upright" manner. The heat exchange passage is provided inside the heat exchange plate 300, and the heat exchange passage includes the inflow passage 310 and the outflow passage 320. The ratio of the sum of the cross-sectional areas of each of the inflow passages 310 to the sum of the cross-sectional areas of each of the outflow passages 320 is 3:2 to 4:1. By the above-mentioned structural design, the present invention can allow more heat exchange medium to the heat exchange passage by using the design with a relatively large cross-sectional area of the inflow passage 310, and also can increase the internal pressure of the flow passage by using the design with a relatively small cross-sectional area of the outflow passage 320, thereby ensuring the temperature equalization effect of the heat exchange plate 300 and improving the temperature consistency of the battery pack.

Based on the above-described detailed description of several exemplary embodiments of the battery pack proposed by the present invention, an exemplary embodiment of the vehicle proposed by the present invention will be described below.

In an embodiment of the present invention, the vehicle proposed by the present invention includes a battery pack proposed by the present invention and described in detail in the above-mentioned embodiment. The heat exchange passage of the battery pack is adapted to circulate the cooling medium, and the cooling medium is adapted to exchange heat with the cylindrical battery in the liquid-to-gas conversion process.

It should be noted here that the vehicles shown in the accompanying drawings and described in this description are only a few examples of many kinds of vehicles capable of employing the principles of the present invention. It should be clearly understood that the principles of the present invention are in no way limited to any detail of the vehicle or any component of the battery pack shown in the accompanying drawings or described in this description.

In summary, the vehicle proposed by the present invention adopts the battery pack proposed by the present invention, and the heat exchange system adopts a direct cooling form. By means of the above-mentioned design, the present invention can increase the internal pressure of the flow passage by using the design that the cross-sectional area of the outflow passage is relatively small, so that the cooling medium can be easily maintained under a liquid state at a relatively high pressure to avoid premature conversion to the gaseous state. It ensures that sufficient liquid cooling medium can participate in the evaporation and heat absorption in the outflow passage, thereby further ensuring the temperature equalization effect of the heat exchange plate. It is further suitable for the application of the direct cooling solution.

Exemplary embodiments of battery packs proposed by the present invention have been described and/or illustrated in detail above. However, the embodiments of the present invention are not limited to the particular embodiments described herein. Rather, the components and/or steps of each embodiment may be used independently and separately from the other components and/or steps described herein. Each component and/or each step of one embodiment may also be used in conjunction with other components and/or steps of other embodiments. In introducing elements/components/etc. described and/or illustrated herein, the terms "a," "an," and "the above-mentioned", etc. are used to indicate that one or more elements/components/etc. are present. The terms "comprising", "including", and "having" are used in an open-ended inclusive sense and mean that there may be additional elements/components/etc. in addition to the listed elements/components/etc. In addition, the terms "first" and "second" in the claims and the description are used only as labels, and are not intended to be numerical limitations on their objects.

Although the battery pack proposed by the present invention have been described in terms of different specific examples, those skilled in the art will recognize that modifications may be made to the implementation of the present invention within the spirit and scope of the claims.

## Claims

1. A battery pack, **characterized by** comprising:
a battery box (100) comprising a bottom plate (110);
a cylindrical battery (200) disposed in the battery box (100) and axially parallel to the bottom plate (110); and
a heat exchange system comprising a heat exchange plate (300), wherein a large surface of the heat exchange plate (300) is disposed on the bottom plate (110) relatively perpendicularly; the heat exchange plate (300) contacts with the cylindrical battery (200) for heat exchange; the heat exchange plate (300) has a heat exchange passage therein; the heat exchange passage comprises at least one inflow passage (310) and at least one outflow passage (320); and the heat exchange passage is adapted to be in fluid communication with a cooling medium which is adapted to exchange heat with the cylindrical battery (200) by a liquid-to-gas conversion process;
wherein a ratio of a sum of cross-sectional areas of each of the inflow passages (310) to a sum of cross-sectional areas of each of the outflow passages (320) is 3:2 to 4:1.

2. The battery pack according to claim 1, **characterized in that** the ratio of the sum of the cross-sectional areas of each of the inflow passages (310) to the sum of the cross-sectional areas of each of the outflow passages (320) is 7:4 to 8:3.

3. The battery pack according to claim 1, **characterized in that** the heat exchange passage comprises at least two of the inflow passages (310) and at least two of the outflow passages (320); wherein, in a first direction (X) perpendicular to the bottom plate (110), at least two of the inflow passages (310) are at different distances from the bottom plate (110); at least two of the outflow passages (320) are at different distances from the bottom plate (110); and the inflow passage (310) farthest from the bottom plate (110) is farther away from the bottom plate (110) than the outflow passage (320) farthest from the bottom plate (110).

4. The battery pack according to claim 3, **characterized in that**, in the first direction (X), the inflow passage (310) closest to the bottom plate (110) is farther away from the bottom plate (110) than the outflow passage (320) farthest from the bottom plate (110).

5. The battery pack according to claim 1, **characterized in that** the cylindrical battery (200) has a side surface and two end surfaces; the side surface is connected between the two end surfaces; the two end surfaces are spaced apart in an axial direction of the cylindrical battery (200) and are respectively perpendicular to the axial direction; and the heat exchange plate (300) is in contact and heat-conductive connection with the end surface of the cylindrical battery (200).

6. The battery pack according to claim 5, **characterized in that** the cylindrical battery (200) comprises a housing and a cell; the cell is disposed in the housing; the cell comprises a positive pole tab and a negative pole tab; the cell has opposite first and second ends in a second direction (Y) parallel to the axial direction; the positive pole tab and the negative pole tab are both located at the first end; the two end surfaces are a first end surface (210) and a second end surface, respectively; the first end surface (210) corresponds to the first end; and the second end surface corresponds to the second end; wherein the heat exchange plate (300) is in heat conducting contact with the second end surface.

7. The battery pack according to claim 1, **characterized in that** the battery pack comprises at least one battery set (201); the battery set (201) comprises at least two layers of battery columns (202) arranged in the first direction (X), and the first direction (X) is perpendicular to the bottom plate (110); and the battery columns (202) comprises at least two of the cylindrical batteries (200) arranged in a third direction (Z), and the third direction (Z) is parallel to the bottom plate (110) and parallel to the heat exchange plate (300).

8. The battery pack according to claim 7, **characterized in that** the inflow passages (310) and the outflow passages (320) are arranged in the first direction (X).

9. The battery pack according to claim 7, **characterized in that** the battery pack comprises at least two of the battery sets (201) arranged in the second direction (Y) parallel to the axial direction;
wherein the end surfaces of the cylindrical batteries (200) of two adjacent battery sets (201) are respectively in contact with opposite sides of the heat exchange plate (300).

10. The battery pack according to claim 1, **characterized in that** the cylindrical battery (200) is a lithium iron phosphate battery.

11. A vehicle, **characterized by** comprising the battery pack according to any one of claims 1-10, wherein the heat exchange passage of the battery pack is adapted to circulate a cooling medium; and the cooling medium is adapted to exchange heat with the cylindrical battery (200) in the liquid-to-gas conversion process.
